# EUROPÄISCHE PATENTSCHRIFT

(11) **EP 0 615 694 B1**
(45) Veröffentlichungstag und Bekanntmachung des Hinweises auf die Patenterteilung: **19.06.1996**
(21) Anmeldenummer: 94103932.3
(22) Anmeldetag: 14.03.1994
(51) Int. Cl.: A23L 1/015, A23L 1/32, C11B 1/10

(54) **Verfahren zur Herstellung von fett- und cholesterinreduzierten pulverförmigen Produkten auf Eibasis**
Process to prepare powdered low fat and low cholesterol egg products
Procédé de préparation de poudres à base d'oeuf à teneur réduite en matière grasse et cholestérol

(30) Priorität: 15.03.1993 DE 4307979
(43) Veröffentlichungstag der Anmeldung: 21.09.1994
(73) Patentinhaber: SKW Trostberg Aktiengesellschaft, D-83308 Trostberg (DE)
(72) Erfinder: Heidlas, Jürgen, Dr., D-83308 Trostberg (DE); Cully, Jan, Dr., D-84518 Garching (DE); Vollbrecht, Heinz-Rüdiger, Dr., D-83352 Altenmarkt (DE)
(74) Vertreter: Huber, Bernhard, Dipl.-Chem.

(56) Entgegenhaltungen:
- WO-A-90/02788
- US-A- 5 041 245
- FOOD SCIENCE & TECHNOLOGY TODAY, Bd.4, Nr.4, 1990 Seiten 213 - 214 MOATES ; VAN BENTEM 'separating out the value'

## Beschreibung

Die Erfindung betrifft ein Verfahren zur Herstellung von fett- und cholesterinreduzierten pulverförmigen Produkten auf Eibasis, die im wesentlichen die gleichen funktionalen Eigenschaften besitzen wie das Ausgangsmaterial.

Cholesterin und Cholesterinester (im folgenden als Cholesterinderivate bezeichnet) sind lipophile Substanzen, die in zahlreichen wichtigen Lebensmitteln tierischen Ursprungs, wie z.B. Eigelb, Fleisch, tierischen Fetten usw., enthalten sind.

Die Aufnahme zu hoher Fett- und Cholesterinmengen durch die Nahrung stellt bekanntermaßen einen erhöhten Risikofaktor für Arteriosklerose bzw. eine koronare Herzkrankheit dar.

Aus diesem Grund zielen Bestrebungen der Lebensmittelindustrie darauf ab, eine deutliche Reduzierung der Fette bzw. der Cholesterinderivate in fettreichen Lebensmitteln tierischen Ursprungs vorzunehmen.

Ein wesentliches Problem ist hierbei, die sensorischen und ernährungsphysiologischen Eigenschaften der Lebensmittel weitgehend zu erhalten.

Hinsichtlich der Cholesterinreduzierung sind zwar schon eine Reihe von Verfahren zur Isolierung von Cholesterinderivaten bekannt geworden, doch eignen sich diese Methoden wegen der chemischen Veränderungen wichtiger Bestandteile des Ausgangsmaterials (wie z.B. der Denaturierung der Proteine) nicht zur Reduzierung des Cholesteringehaltes in Lebensmitteln.

Ein relativ schonendes Verfahren, welches erst in jüngster Zeit bekannt geworden ist, bedient sich für die Entfernung der Cholesterinderivate der CO₂-Hochdruckextraktion (vgl. V. Krukonis, Supercritical Fluid Processing, International Symposium on Supercritical Fluids, Nice, 1988 und A. Bude und D. Knorr, Reduction of Cholesterol in Egg Powder and Whole Eggs by Extraction with Supercritical Carbon Dioxide, Fifth International Congress of Engineering and Food, Cologne, 1989).

In der DE-OS 39 29 555 wird vorgeschlagen, zur Entfernung der Cholesterinderivate die betreffenden Lebensmittel zunächst mit verdichtetem CO₂ zu behandeln, wobei neben den Cholesterinderivaten auch lipophile Substanzen, wie z.B. Triglyceride, Phospholipide, Farbstoffe etc. mitextrahiert werden. Durch anschließende Adsorption oder Adduktbildung werden die Cholesterinderivate aus dem CO₂-Strom entfernt und dieser mit lipophilen Bestandteilen erneut über das Extraktionsgut zurückgeführt.

Nachteilig bei den CO₂-Verfahren ist die Tatsache, daß relativ große Gasmengen und vergleichsweise hohe Drücke, die in der Regel bei > 200 bar liegen, erforderlich sind, um eine entsprechende Gasbeladung mit lipiden Stoffen zu erreichen, wodurch eine Umsetzung in den großtechnischen Maßstab aufgrund der extrem hohen Anlagenkosten sehr oft unwirtschaftlich wird.

Es ist bekannt, verdichtetes Propan als Extraktionsmedium für Fette und Öle einzusetzen (z.B. US 2,560,935, US 4,331,695 sowie DE-PS 23 63 418). Hierbei wird zwar in einem vergleichsweise niedrigen Druckbereich eine hohe Beladung des Mediums mit Lipiden erreicht. Als Nachteil der Propanextraktion wird jedoch die geringe Selektivität gegenüber den verschiedenen lipophilen Inhaltsstoffen gesehen.

So werden Triglyceride, Cholesterinderivate und auch Phospholipide als isolierte Einzelkomponenten in verdichtetem Propan sehr gut gelöst. Da aber Phospholipide, wie z.B. Lecithin, aufgrund ihrer ernährungsphysiologischen und funktionalen Eigenschaften wertvolle Inhaltsstoffe der Eiprodukte darstellen, muß es als nachteilig angesehen werden, wenn diese Stoffe weitgehend entfernt werden. Ein wirtschaftlich sinnvolles Verfahren zur Herstellung fett- und cholesterinreduzierter Eiprodukte mit einem relativ hohen Gehalt an Phospholipiden in einem Extraktionsschritt war bisher nicht bekannt.

Der Erfindung liegt daher die Aufgabe zugrunde, ein Verfahren zur Herstellung von fett- und cholesterinreduzierten pulverförmigen Produkten auf Eibasis durch Behandlung mit verdichteten Gasen zu schaffen, welches die genannten Nachteile des Standes der Technik nicht aufweist, sondern es mit einem geringen technischen Aufwand ermöglicht, die Fette und Cholesterinderivate in den Eiprodukten drastisch zu reduzieren, ohne daß hierbei eine weitgehende Entfernung der Phospholipide und insbesondere des Lecithins erfolgt.

Diese Aufgabe wird erfindungsgemäß dadurch gelöst, daß man das pulverförmige Ausgangsmaterial mit flüssigem Propan bei einem Druck ≦ 200 bar und einer Temperatur ≦ 70°C extrahiert. Es hat sich nämlich überraschenderweise gezeigt, daß man bei Einhaltung dieser Extraktionsbedingungen eine selektive Entfernung der Fette und Cholesterinderivate erreicht, während die Phospholipide überwiegend im Eiprodukt verbleiben, so daß die funktionalen Eigenschaften des Ausgangsmaterials im Produkt erhalten bleiben.

Für das erfindungsgemäße Verfahren werden pulverförmige Produkte auf Eibasis, wie z.B. Eigelbpulver oder Volleipulver, oder Produkte, die diese Stoffe enthalten, eingesetzt. Es ist erfindungswesentlich, daß die Extraktion mit Propan in flüssigem Zustand bei einem Druck ≦ 200 x 10⁵ Pa (200 bar) und einer Temperatur ≦ 70°C durchgeführt wird. Die untere Grenze des anwendbaren Bereichs für Druck und Temperatur wird durch die Bedingung festgelegt, daß das Propan flüssig sein muß. Auf diese Weise wird sichergestellt, daß das Lecithin bzw. die Phospholipide sich nur teilweise im flüssigen Propan lösen, während die Löslichkeit der Fette und der Cholesterinderivate unverändert gut ist, so daß diese Stoffe nahezu vollständig entzogen werden können.

Aufgrund der empfindlichen Eigenschaften der weiteren Inhaltsstoffe von Eiprodukten, insbesondere der Proteine, wird die Extraktion vorzugsweise in einem Druckbereich von 10 bis 60 x 10⁵ Pa (10 bis 60 bar) und bei einer Extraktionstemperatur zwischen 20 und 60°C, insbesondere 25 bis 50°C durchgeführt. Auf diese Weise wird eine Denaturierung der Proteine vermieden. Die eingesetzte Propanmenge kann in weiten Grenzen variiert werden und richtet sich im wesentlichen nach der Menge des zu entfernenden Gehaltes an Fetten bzw. Cholesterinderivaten. In der Regel reichen 1 bis 30 kg pro kg Ausgangsmaterial aus, um eine zufriedenstellende Reduzierung der zu entfernenden Inhaltsstoffe zu erzielen. Im Rahmen der Erfindung ist es auch möglich, das Propan im Gemisch mit bis zu 45 Gew.-% Butan einzusetzen.

Im Anschluß an die Extraktion können die im flüssigen Propan gelösten Fette und Cholesterinderivate bzw. Reste an Phospholipiden durch Verdampfung und/oder Druckabsenkung aus dem Propan wieder abgeschieden werden. Das Propangas kann dann anschließend nach Verflüssigung wieder für die Extraktion der Eiprodukte herangezogen werden, so daß man eine geringe Menge an Propan ständig im Kreis führen kann, wodurch die Wirtschaftlichkeit des Verfahrens deutlich erhöht wird.

Es ist im Rahmen der Erfindung auch möglich, durch Variation der Extraktionsbedingungen die Fette nur teilweise aus den Eiprodukten zu extrahieren, falls dies aus bestimmten Gründen erwünscht ist. So kann durch Variation des Extraktionsdruckes, der Extraktionstemperatur sowie der Propanmengen das Verhältnis von Fetten zu Cholesterinderivaten gezielt gesteuert werden, wodurch die Effektivität des Verfahrens zusätzlich gesteigert wird.

Mit Hilfe des erfindungsgemäßen Verfahrens ist es möglich, cholesterin-und fettarme pulverförmige Produkte auf Eibasis mit guten sensorischen Eigenschaften herzustellen, deren Cholesterin- und Fettgehalt um mehr als 85 % reduziert ist, wobei mindestens 50 % der Phospholipide des Ausgangsmaterials erhalten bleiben.

Die nachfolgenden Beispiele sollen die Erfindung näher erläutern.

### Beispiel 1

1000 g Eigelbpulver (Gesamtlipide: 60 Gew.-%; Fett: 45 Gew.-%; Phospholipide: 15 Gew.-%; Gesamtcholesterin: 2,1 Gew.-%) werden bei 20 x 10⁵ Pa (20 bar) und 25°C in einem 4-l-Druckautoklaven innerhalb von 2 Stunden von 30 kg flüssigem Propan durchströmt. Der Prozeß wird im Kreis geführt, wobei die Extraktabscheidung durch Verdampfen des Propans in einem Abscheider erreicht wird. Der Extraktionsrückstand (530 g) wurde analysiert: Gesamtlipide: 24,5 Gew.-%; Fett: 5 Gew.-%; Phospholipide: 19,5 Gew.-%; Gesamtcholesterin: 0,07 Gew.-%.

### Beispiel 2

1000 g Eigelbpulver (Gesamtlipide: 60 Gew.-%; Fett: 45 Gew.-%; Phospholipide: 15 Gew.-%; Gesamtcholesterin: 2,1 Gew.-%) werden bei 20 x 10⁵ Pa (20 bar) und 45°C in einem 4-l-Druckautoklaven innerhalb von 80 Minuten von 20 kg flüssigem Propan durchströmt. Der Prozeß wird im Kreis geführt, wobei die Extraktabscheidung durch Verdampfen des Propans im Abscheider vorgenommen wird. Der Extraktionsrückstand (523 g) wurde analysiert: Gesamtlipide: 23,6 Gew.-%; Fett: 7 Gew.-%; Phospholipide: 16,5 Gew.-%; Gesamtcholesterin: 0,06 Gew.-%.

### Beispiel 3

1000 g Eigelbpulver (Gesamtlipide: 60 Gew.-%; Fett: 45 Gew.-%; Phospholipide: 15 Gew.-%; Gesamtcholesterin: 2,1 Gew.-%) werden bei 60 x 10⁵ Pa (60 bar) und 45°C in einem 4-l-Druckautoklaven innerhalb von 2 Stunden von 30 kg flüssigem Propan durchströmt. Der Prozeß wird im Kreis geführt, wobei die Extraktabscheidung durch Verdampfen des Propans im Abscheider erreicht wird. Der Extraktionsrückstand (500 g) wurde analysiert: Gesamtlipide: 20 Gew.-%; Fett: 3 Gew.-%; Phospholipide: 17 Gew.-%; Gesamtcholesterin: 0,05 Gew.-%.

### Beispiel 4

1000 g Volleipulver (Gesamtlipide: 41 Gew.-%; Fett: 27 Gew.-%; Phospholipide: 14 Gew.-%; Gesamtcholesterin: 1,4 Gew.-%) werden bei 40 x 10⁵ Pa (40 bar) und 35°C in einem 4-l-Druckautoklaven innerhalb von 1 Stunde von 15 kg flüssigem Propan durchströmt. Der Prozeß wird im Kreis geführt, wobei die Extraktabscheidung durch Verdampfen des Propans im Abscheider vorgenommen wird. Der Extraktionsrückstand (683 g) wurde analysiert: Gesamtlipide: 14 Gew.-%; Fett: 6 Gew.-%; Phospholipide: 8 Gew.-%; Gesamtcholesterin: 0,03 Gew.-%.

### Beispiel 5

1000 g Eigelbpulver (Gesamtlipide: 60 Gew.-%; Fett: 45 Gew.-%; Phospholipide: 15 Gew.-%; Gesamtcholesterin: 2,1 Gew.-%) werden bei 20 x 10 Pa (20 bar) und 45°C in einem 4-l-Druckautoklaven innerhalb von 35 Minuten von 6 kg flüssigem Propan durchströmt. Der Prozeß wird im Kreis geführt, wobei die Extraktabscheidung durch Verdampfen des Propans im Abscheider erzielt wird. Der Extraktionsrückstand (550 g) wurde analysiert: Gesamtlipide: 28 Gew.-%; Fett: 12,5 Gew.-%; Phospholipide: 15 Gew.-%; Gesamtcholesterin: 0,09 Gew.-%.

## Patentansprüche

1. Verfahren zur Herstellung von fett- und cholesterinreduzierten pulverförmigen Produkten auf Eibasis durch Behandlung mit verdichteten Gasen,
**dadurch gekennzeichnet,**
daß man das pulverförmige Ausgangsmaterial auf Eibasis mit flüssigem Propan bei einem Druck ≦ 200 x 10⁵ Pa (200 bar) und einer Temperatur ≦ 70°C extrahiert.

2. Verfahren nach Anspruch 1,
**dadurch gekennzeichnet,**
daß man die Extraktion bei einem Druck von 10 bis 60 x 10⁵ Pa (10 bis 60 bar) und einer Temperatur zwischen 20 und 60°C durchführt.

3. Verfahren nach den Ansprüchen 1 und 2,
**dadurch gekennzeichnet,**
daß die Extraktionstemperatur zwischen 25 und 50°C liegt.

4. Verfahren nach den Ansprüchen 1 bis 3,
**dadurch gekennzeichnet,**
daß man pro kg Ausgangsmaterial 1 bis 30 kg Propan verwendet.

5. Verfahren nach den Ansprüchen 1 bis 4,
**dadurch gekennzeichnet,**
daß die Fette und Cholesterinderivate durch Verdampfung und/oder Druckabsenkung aus dem Propan abgeschieden werden.

6. Verfahren nach den Ansprüchen 1 bis 5,
**dadurch gekennzeichnet,**
daß man das Propan im Gemisch mit Butan verwendet.

## Claims

1. Process for the production of egg-based products in powder form with a reduced fat and cholesterol content by treatment with compressed gases,
**wherein**
the egg-based starting material in powder form is extracted with liquid propane at a pressure of ≦ 200 x 10⁵ Pa (200 bar) and a temperature of ≦ 70°C.

2. Process as claimed in claim 1,
**wherein**
the extraction is carried out at a pressure of 10 to 60 x 10⁵ Pa (10 to 60 bar) and at a temperature between 20 and 60°C.

3. Process as claimed in claims 1 and 2,
**wherein**
the extraction temperature is between 25 and 50°C.

4. Process as claimed in claims 1 to 3,
**wherein**
1 to 30 kg propane is used per kg starting material.

5. Process as claimed in claims 1 to 4,
**wherein**
the fats and cholesterol derivatives are separated from the propane by evaporation and/or reduction in pressure.

6. Process as claimed in claims 1 to 5,
**wherein**
the propane is used in a mixture with butane.

## Revendications

1. Procédé pour la préparation de produits en poudre à base d'oeufs à teneur réduite en matière grasse et cholestérol par traitement avec des gaz comprimés,
caractérisé en ce que l'on extrait la matière de départ à base d'oeuf en poudre avec du propane liquide sous une pression de 200 x 10⁵ Pa (200 bars) et à une température ≦ 70°C.

2. Procédé selon la revendication 1,
caractérisé en ce que l'on effectue l'extraction à une pression de 10 à 60 x 10⁵ Pa (10 à 60 bars) et à une température entre 20 et 60°C.

3. Procédé selon les revendications 1 et 2,
caractérisé en ce que la température d'extraction se situe entre 25 et 50°C.

4. Procédé selon les revendications 1 à 3,
caractérisé en ce que l'on utilise 1 à 30 kg de propane par kg de matière de départ .

5. Procédé selon les revendications 1 à 4,
caractérisé en ce que l'on sépare les matières grasses et les dérivés de cholestérol du propane par évaporation et/ou réduction de la pression.

6. Procédé selon les revendications 1 à 5,
caractérisé en ce que l'on utilise le propane en mélange avec du butane.
